# FASCICULE DE BREVET EUROPEEN

(11) **EP 2 173 680 B1**
(45) Date de publication et mention de la délivrance du brevet: **16.03.2011**
(21) Numéro de dépôt: 08806956.2
(22) Date de dépôt: 28.05.2008
(51) Int. Cl.: C04B 11/26, C04B 28/14, F27B 7/02

(54) **INSTALLATION DE PRODUCTION D'UN LIANT SULFATIQUE MULTICOMPOSANTS À HAUTES PERFORMANCES MÉCANIQUES, À PARTIR DE GYPSE ET/OU DE SES DÉRIVÉS, PROCÉDÉ DE FABRICATION D'UN TEL LIANT ET LIANT AINSI OBTENU**
ANLAGE ZUR HERSTELLUNG EINES MEHRTEILIGEN SULPHATHALTIGEN BINDEMITTELS MIT HOHER MECHANISCHER LEISTUNG AUS GIPS ODER DERIVATEN DAVON, VERFAHREN ZUR HERSTELLUNG EINES SOLCHEN BINDEMITTELS UND SICH DARAUS ERGEBENDES BINDEMITTEL
PLANT FOR PRODUCING A MULTI-COMPONENT SULPHATE-CONTAINING BINDER HAVING HIGH MECHANICAL PERFORMANCES, FROM GYPSUM AND/OR DERIVATIVES THEREOF, PROCESS FOR MANUFACTURING SUCH A BINDER AND RESULTING BINDER

(30) Priorité: 07.08.2007 BE 200700372
(43) Date de publication de la demande: 14.04.2010
(73) Titulaire: Societe Innov.Eco, 31, avenue de la Princesse Grace 98000 Monaco (MC)
(72) Inventeur: JOUWSMA, Adriaan Jan, 3328 SN Dordrecht (NL)
(86) Numéro de dépôt international: PCT/IB2008/002257
(87) Numéro de publication internationale: WO 2009/019601

(56) Documents cités:
- US-A- 4 502 901
- US-A1- 2003 175 193
- US-A1- 2004 182 286

## Description

### Domaine technique de l'invention.

La présente invention est du domaine des installations industrielles de production d'un liant sulfatique à base d'anhydrite III à hautes performances mécaniques, à partir de gypse et/ou de ses dérivés. Elle a pour objet une telle installation, ainsi qu'un procédé d'obtention d'un tel liant et les liants hydrauliques multicomposants dérivés combinant les propriétés des liants sulfatiques traditionnels avec celles des ciments et des chaux en général.

### Etat de la technique.

Les différents plâtres actuellement sur le marché sont principalement obtenus à partir :
✔ De plâtres semi-hydrate β de formule CaSO₄½H₂O, à des températures comprises entre 135°C et 185°C, par cuisson en voie sèche.
✔ De plâtres semi-hydrate α de formule CaSO₄1/2H₂O à des températures de l'ordre de 180°C par cuisson en voie humide.
✔ De plâtres anhydrite II (All) ou surcuit à des températures de l'ordre 500°C par cuisson en voie sèche.

Les plâtres semi-hydrate β sont obtenus avec différents systèmes de cuisson que l'on peut résumer ainsi :
✔ Dispositif de cuisson à chauffage direct
   ■ Four rotatif à contre-courant ou co-courant
   ■ Broyeurs cuiseurs
   ■ Procédés "flash"
✔ Dispositif de cuisson à chauffage indirect
   ■ Four rotatif à faisceau tubulaire ou autre dispositif
   ■ Four marmite à axe horizontal
   ■ Four marmite à axe vertical
   ■ Four statique
   ■ Vis "holoflite"
   ■ Par "fluidisation"

Suivant les procédés on obtient des plâtres semi-hydrate β avec un pourcentage plus ou moins important éventuel, volontaire ou non :
■ De gypse
■ D'anhydrite III ou anhydrite soluble
■ D'anhydrite II ou surcuit

L'obtention de certains plâtres peut nécessiter la présence volontaire d'un pourcentage d'anhydrite III. Or, l'anhydrite III constitue une étape intermédiaire entre les semi-hydrates et l'anhydrite II. De formule CaSO₄, εH₂O, elle contient une faible proportion d'eau liée : de l'ordre de 0,02 % à 0,9 %.

Le livre « Le Plâtre » - Editions Eyrolles - 1982 « Physico-chimie, fabrication et emplois », « Le travail du plâtre et les éléments préfabriqués en plâtre par A.C. Baouman », décrit au chapitre V - paragraphe 1.3 que : « l'étude de cette phase est rendue complexe par la difficulté de l'obtenir sous sa forme pure. La température élevée nécessaire à son obtention conduit à une déshydratation partielle en anhydrite II, de sorte que l'on obtient presque toujours des mélanges. Enfin, l'anhydrite III est instable et très avide d'eau ; sa transformation en semi-hydrate (ou réversion) est donc très rapide même en présence d'air peu humide. » « Il faut atteindre industriellement des températures de matière de l'ordre de 180°C et plus pour avoir dans le mélange des proportions importantes de cette phase. Les conditions industrielles sont variables selon la répartition granulométrique de la poudre et la tension de vapeur ambiante »

On connaît des installations destinées à permettre la production d'un liant sulfatique à partir d'un produit pulvérulent, tel qu'à base sulfate de calcium hydraté (CaSO₄, 2 H₂O), gypse naturel ou gypse de synthèse notamment, voire d'un produit dérivé de l'un de ces gypses. Une telle installation comporte des moyens de chauffage du produit pulvérulent associés à des moyens de refroidissement du produit pulvérulent chauffé. De très nombreux documents relatifs à la fabrication des plâtres font état d'environnements technologiques connus parmi lesquels: « Le Plâtre » - Editions Eyrolles - 1982, « Physico-chimie, fabrication et emplois », déjà citée ci-dessus, tous ces documents font état des caractéristiques et moyens connus de mise en oeuvre dont certains ont été repris et mentionnés dans la littérature brevet et notamment US 4 647 486 (UNITED STATES GYPSUM CO), EP 1 152 993 (COUTURIER) et WO 94 29232 (VIMPEX TECH FORSCHUNGSGES).

Selon la nature de l'installation et son mode de mise en oeuvre, le liant sulfatique obtenu à partir de la mise en oeuvre des moyens connus est susceptible d'être un plâtre semi-hydrate β (CaSO₄, ½ H₂O), un plâtre semi-hydrate α (CaSO₄, H₂O), un plâtre anhydrite III (CaSO₄, ε H₂O) avec ε < ½, un plâtre anhydrite II (CaSO₄) ou un plâtre anhydrite I (CaSO₄).

Ainsi, un plâtre semi-hydrate β est obtenu par chauffage du produit pulvérulent à une température comprise entre 140°C et 185°C, à la pression atmosphérique et par voie sèche. Le chauffage du produit pulvérulent est réalisé dans un four indifféremment à contact direct ou indirect. Au cours du chauffage, l'eau du produit pulvérulent est éliminée à l'état de vapeur sèche, de sorte que le plâtre semi-hydrate β obtenu se présente sous la forme d'un solide microporeux constitué d'un assemblage lâche de micro-cristallites. Le refroidissement du produit pulvérulent chauffé est plus ou moins rapide, selon qu'il s'agit d'un refroidissement selon un procédé flash ou d'un refroidissement dans un refroidisseur à faisceaux tubulaires. Un plâtre semi-hydrate α est obtenu par chauffage du gypse à une température de l'ordre de 140°C à 180°C, par voie humide à une pression de vapeur d'eau supérieure à 1 bar. Le chauffage du produit pulvérulent est réalisé à l'intérieur d'un autoclave. La formation d'un tel plâtre est régie par un mécanisme de dissolution/recristallisation en milieu liquide de sorte que le plâtre semi-hydrate α obtenu présente une texture cristallisée compacte. II en ressort que ce dernier permet des taux de gâchage bien plus faible que ceux obtenus pour le plâtre semi-hydrate β. Il en résulte que le plâtre semi-hydrate α présente des caractéristiques mécaniques élevées qui confèrent à ce dernier un intérêt industriel important.

Les plâtres anhydrites III, II et I sont obtenus par chauffage de gypse ou d'un plâtre semi-hydrate β ou α à une température respective de l'ordre de 185°C à 350°C pour le plâtre anhydrite III, de l'ordre de 350°C à 600°C pour le plâtre anhydrite II et supérieure à 600°C pour le plâtre anhydrite I. Parmi ces plâtres anhydrites, seul le plâtre anhydrite III est aisément soluble dans l'eau et en conséquence présente des temps de durcissement du même ordre que les plâtres semi-hydrates.

### Objet de l'invention.

Selon une approche de la démarche inventive de la présente invention, celle-ci trouve son fondement dans une appréciation et un constat spécifique relatifs à diverses techniques. Plus particulièrement, il convient de rappeler la technologie relative à la composition des ciments de Portland et des plâtres.

Les ciments Portland sont principalement constitué de silicates de calcium (60% de silicate tricalcique 3CaO.SiO2 ou C3S en notation cimentière et 20 % de silicate bicalcique 2CaO.SiO2 ou C2S) et d'aluminates (5% à 10% d'aluminate tricalcique 3CaO.AI203 ou C3A et 10% à 15% d'aluminoferrite tétracalcique 4CaO.AI203.Fe2O3 ou C4AF).

Le document US2004/0182286 (Danny W. Cox) décrit un procédé pour produire un composé à base de sulfate de calcium hémi-hydrate de type α II pour les composés obtenus à partir de ce procédé, et de type a III pour des produits réalisés à partir de ces composés. Le produit obtenu par la mise en oeuvre du procédé divulgué par ce document, est un produit de type hémi-hydrate α formé à partir de briquettes de sulfate de calcium déshydraté qui sont préalablement mises en forme à partir de poudres broyées puis compactées sous haute pression. Ces briquettes sont ensuite calcinées pour obtenir après calcination des briquettes d'hémi-hydrate α qui sont ensuite séchées, puis broyées. Le compactage à haute pression des poudres broyées et leur mise en conformation en briquettes permet d'éviter leur fissuration, voire leur destruction, pendant l'opération suivante de calcination,

L'hydratation de C3S et C2S conduit à la formation de silicates de calcium hydratés (C-S-H suivant la notation cimentière) et d'hydroxyde de calcium Ca(OH)₂.

L'hydratation des aluminates en présence de gypse régulateur de prise conduit à la formation de sulfo-aluminates et d'aluminates de calcium dont les proportions dépendent des quantités respectives de sulfate et d'aluminates.

Le développement progressif des phases C-S-H qui remplissent les espaces intergranulaires conduit à un matériau de faible porosité, de résistance mécanique élevée et possédant une faible solubilité dans l'eau. Les additions minérales telles que les laitiers de haut fourneau, les cendres volantes, les pouzzolanes, les fumées de silice, peuvent encore augmenter sa durabilité.

Les liants à base de sulfates de calcium peuvent être constitués de différents types de sulfates ayant différentes structures cristallines, différentes composions et différentes solubilités rappelées dans le tableau et la figure ci-dessous.

| *Différents types de sulfates de calcium* | | | | | | | |
|---|---|---|---|---|---|---|---|
| Formules | Masse Mol.. et nom | Nom commun | Nombre de types | Varieté | Teneur en eau stoechio. | Teneur en eau pratique | Masse spécifique |
| CaSO4.2H20 Monoclinic | 172.17 Dihydrate | Gypse Plâtre durci | 1 | | 20.92 | | 2.31 |
| CaSO4. 1/2 H2O Rhonibodrique | 145.15 Hemihydrate | Hemihydrater Hemihydrate | 2 | α β | 6.21 6.21 | 6.21/6.27 6.21/8** 6.21 6.21/8.2** | 2.757 2.619 to 2.637 |
| CaSO4 Hexagonal | 136.14 Anhydrite III | Anhydrite soluble | 2 | α β | 0 | 0.02/0.05 0.6/0.9 | 2.484 |
| CaSO4 Rhomboedrique | 136.14 Anhydrite II | Anhydrite insoluble | 1 | | 0 | | 2.93 to 2.97 |
| CaSO4 | 136.14 Anhydrite I | Anhydrite haute t° | | | 0 | | |
| CaSO4 | sulfate de calcium fondu | | 1 | | 0 | | |

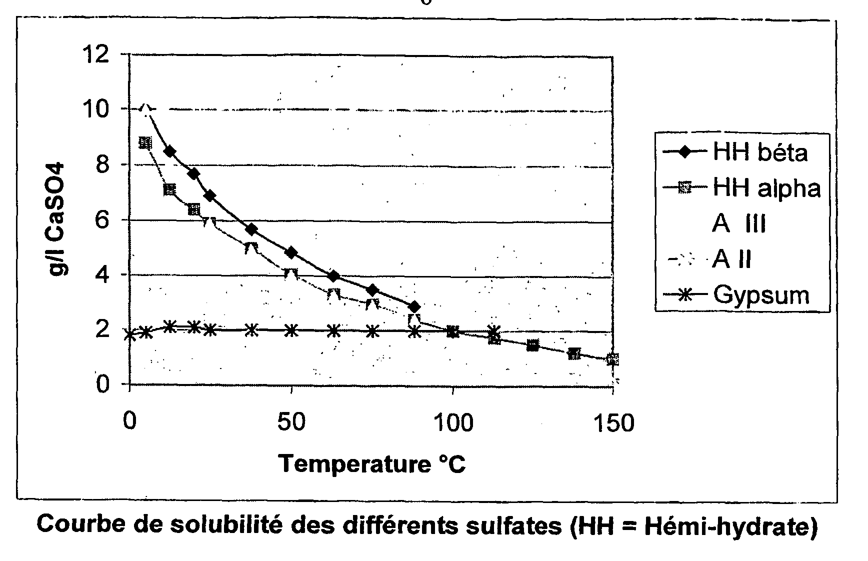

L'hémi-hydrate β, forme la plus commune des hémi-hydrates est le constituant principal des plâtres de Paris. Il est obtenu par cuisson du gypse (di-hydrate CaS04.2H2O) entre 150°C et 165°C, température très basse comparée à la température de cuisson des clinkers de ciment Portland (1450°C).

L'hémi-hydrate α est obtenu par cuisson de gypse aux mêmes températures mais sous pression de vapeur élevée. Cette variété d'hémi-hydrate dont le faciès cristallin est très différent de celui de l'hémi-hydrate β. est utilisé dans les applications nécessitant des résistances élevées.

L'anhydrite II ou anhydrite insoluble est utilisée communément dans les applications de chapes auto-lissantes. L'hydratation de ce composé de faible solubilité est accélérée par l'utilisation de sels tels que le sulfate de potassium.

L'anhydrite III, qui existe sous deux formes α et β peut être obtenue par cuisson de gypses à des températures de l'ordre de 250°C. Ces deux variétés de solubilités voisines de celles des hémi-hydrates contiennent de l'eau résiduelle: 0,02 à 0,05 mole pour la forme α et 0,6 à 0,9 mole pour la forme β.

L'anhydrite III, instable en présence d'eau, possède des propriétés hydrauliques qui les différencient des plâtres β et qui, selon leur mode de fabrication, les rapprochent des plâtres α en ce qui concerne les propriétés mécaniques. Son utilisation en combinaison avec les ciments, les chaux, et divers additifs minéraux et organiques permet de concevoir des liants adaptés à différentes applications dans le domaine de la construction tels que, à titre d'exemple, la confection de blocs, de panneaux, de dalles, de chapes auto-lissantes, d'enduits...

De nombreuses expériences relatives aux mélanges de liants sulfatiques (LS) et de ciments de Portland (CP) ont été réalisées. Ainsi la combinaison LS/CP peut conduire à des produits intéressants mais de tels mélanges, s'ils sont mal maîtrisés et non optimisés, peuvent conduire à des matériaux expansifs en raison de la formation de composés nocifs gonflants, tels que l'ettringite 3Ca0.Al2O3.3SO4Ca.32H2O, ou la thaumasite CaSO4.CaCO3.CaSiO3.15H2O. L'ettringite se forme quand le sulfate est le composant mineur; la thaumasite se forme quand le sulfate est le composé majeur, aux températures inférieures à environ 15°C.

L'utilisation d'additions minérales telles que le laitier de haut fourneau, les cendres volantes, les pouzzolanes naturelles, les fumées de silice en combinaison avec le ciment Portland, peut permettre d'accroître la stabilité volumique du matériau et la résistance à l'eau : la précipitation de C-S-H peut entraîner l'encapsulation des cristaux de di-hydrate et protéger ceux-ci de la dissolution. L'amélioration est due également à la consommation de l'hydroxyde de calcium libéré par l'hydratation du ciment Portland (ou ajouté au mélange) par les additions minérales et à un accroissement de la compacité du matériau.

La littérature spécialisée donne quelques résultats de recherches menées sur différents mélanges de ciments Portland, de plâtres et d'additions minérales:

Ainsi, M. SINGH et M. GARG ont publié dans «Relationship between mechanical properties and porosity of water resistant gypsum binder » (1996) C.C.R. Vol 26, pp 449-456, le résultat de leur recherche portant sur des mélanges 70-80% d'hémi-hydrate + CP + laitier de haut fourneau. Les principaux résultats sont les suivants :
■ Principaux hydrates identifiés : di-hydrate + C-S-H + ettringite
■ Diminution de la porosité
■ Forte décroissance de l'absorption d'eau : 6% comparée à 33% pour le plâtre
■ Résistances mécaniques, conservation dans l'eau
   ο 1 jour : 10 MPa pour le mélange et 13 MPa pour le plâtre
   ο 28 jours : 35 MPa pour le mélange et désagrégation pour le plâtre

Par ailleurs, A. COLAK a publié dans « The long term durability performance of gypsum-Portland cement-natural pozzuolana blend » (2002) C.C.R. Vol 32, pp 109-115, le résultat de tests portant sur des mélanges plâtres + CP + pouzzolanes naturelles. Entre autres choses, les mélanges 41 HH β + 41 CP + 18 pouzzolane conservés dans l'eau montrent des résistances précoces relativement élevées qui continuent de croître après 28 jours. Par ailleurs les mélanges sont peu affectés par les conditions humides et ont de bonnes résistances aux cycles de gel-dégel. L'auteur conclut que l'utilisation de pouzzolane est une voie possible d'amélioration de la résistance à l'eau des mélanges CP/plâtres.

Enfin, K. KOVLER a publié dans « Setting and hardening of gypsum-Portland cement-silica fume blends, Part 1 : temperature and setting expansion », (1998) C.C.R. Vol 28, pp 423-437 et dans « Strengths and water absorption for gypsum-cement-silica fume blends of improved performance » (1998) Adv. In Cem. Res., 10, N°2, pp 81-92, une étude portant sur des liants de composition hémihydrate β (65, 75, 85%) + CP + fumée de silice (FS) où le rapport FS/CP varie entre les valeurs de 1/4, 2/3, 3/2 et 4/1. L'utilisation d'un super-plastifiant a été nécessaire. Les résultats montrent que les mélanges ont une prise rapide et possèdent des résistances précoces équivalentes à celles du plâtre. De plus, ils peuvent développer de bonnes résistances en conditions humides qui les apparentent aux liants hydrauliques de la famille des ciments Portland. Ce bon comportement est dû à une microstructure dense où les cristaux de di-hydrate sont encapsulés par les C-S-H provenant de l'hydratation des silicates de calcium du ciment Portland et de la réaction pouzzolanique avec la fumée de silice. L'ettringite n'a pas été détectée dans le matériau.

De nombreux documents font état de démarches inventives orientées vers les procédés et installations de production de tels liants, sans toutefois décrire avec précision les moyens de réalisation.

Le but que se fixe la présente invention est d'atteindre les résultats escomptés et la fabrication de liants économes en énergie (température de cuisson très basse du composant de base A III) et de moindre conséquence sur l'effet de serre (dégagement de CO₂ très faible) à l'aide d'installations précises et sûres permettant d'atteindre ces objectifs et à l'aide de matériaux complémentaires satisfaisants également aux critères environnementaux et économiques.

A cet effet, les installations et procédés d'obtention d'un liant sulfatique connus méritent d'être améliorés pour permettre la formation d'un liant sulfatique à hautes performances mécaniques susceptibles d'être produits à des cadences industrielles et non d'une manière empirique et fragmentaire seulement en laboratoire.

Finalement, un but de la présente invention est de proposer une installation de production industrielle de haute capacité d'un liant sulfatique de base à partir d'un matériau pulvérulent, notamment plâtre naturel ou chimique, gypse naturel ou chimique, ce liant sulfatique présentant des performances mécaniques similaires à celles d'un plâtre semi-hydrate α. L'invention vise également à proposer un procédé d'obtention d'un liant sulfatique à partir de la mise en oeuvre d'une telle installation. La présente invention a enfin pour objet un liant sulfatique ainsi obtenu à fuseau granulaire déterminé compris entre 0 et 5mm où les processus de germination et de croissance cristalline au cours de l'hydratation sont maîtrisés de manière à obtenir des matériaux hydratés de compacité optimisée. La maîtrise des processus de germination/croissance cristalline peut être également obtenue à l'aide d'additifs minéraux et/ou organiques.

Le procédé de cuisson avec un four à contact indirect continu, à contre-courant et suivant un procédé de cuisson en tension de vapeur et dépression déterminée, permet d'obtenir, à partir de gypse naturel ou de gypse de synthèse, de l'anhydrite III à hauteur de 90%, voire de 95% en sortie de four.

Le temps de cuisson sera suffisamment long (entre 1 h et 1 h 30) pour éviter de "brutaliser" les phases de déshydratation et d'améliorer la cristallisation (cristallisation de la phase β à tendance α).

Après cuisson, il est courant de refroidir le plâtre en sortie de four. Ce refroidissement a deux buts bien décrits (Cf "Le Plâtre" - chapitre V - paragraphe 3.1) à savoir:
✔ Un but de stabilisation du plâtre de façon que celui-ci n'évolue plus au cours du stockage dans les silos,
✔ Un autre but qui est de le rendre manipulable au cours des opérations de mélange et conditionnement et d'accepter des additifs qui ne soient pas détériorés par la chaleur.

Etant donné que l'anhydrite III est instable et très avide d'eau, la démarche inventive, non évidente à l'esprit de l'homme du métier a été de permettre de le refroidir, en évitant tout contact avec l'air ambiant et donc avec l'humidité de l'air, pour le stabiliser et obtenir un produit stabilisé, refroidi à une température inférieure à 50°C et contenant le maximum d'AIII (au moins 90% de la quantité d'AIII en sortie du four).

Ce refroidissement se fait dans un refroidisseur à faisceau tubulaire à contact indirect, sans que l'A III soit en contact avec l'air de refroidissement. L'enceinte du refroidisseur recevant l'AIII à refroidir sera en atmosphère ambiante en évitant les entrées d'air parasite, et éventuellement en atmosphère sans vapeur d'eau.

L'installation de la présente invention est une installation apte à produire un liant sulfatique de base à partir d'un produit pulvérulent, et notamment les produits pulvérulents déjà signalés. Cette installation comprend une trémie doseuse, des moyens de chauffage du produit pulvérulent et des moyens de refroidissement du produit pulvérulent chauffé.

Selon la présente invention, cette installation est principalement reconnaissable en ce que lesdits moyens de chauffage et de refroidissement sont associés à :
- des moyens de broyage aptes à l'obtention du produit pulvérulent selon un fuseau granulaire propre à des gypses,
- et des moyens de maintien d'une tension de vapeur saturante et d'une dépression déterminées à l'intérieur desdits moyens de chauffage.

Lesdits moyens de chauffage sont constitués d'un four à inclinaison et à vitesse variables équipé d'un brûleur modulaire. Lesdits moyens de refroidissement sont constitués d'un refroidisseur spécifique conçu de manière à confiner au maximum le produit pulvérulent refroidi et apte à interdire toute possibilité d'hydratation par contact dudit produit pulvérulent refroidi avec l'air ambiant.

Un fuseau granulaire propre à des gypses naturels est de l'ordre compris entre 0 mm et 5 mm. Il est de compris entre 0 micromètre et 80 micromètres environ pour les gypses industriels.

De préférence, le broyage du gypse naturel intervient avant son introduction à l'intérieur du four. Ledit broyage est opéré jusqu'à ce que le gypse présente une granulométrie de 0 micromètres à 300 micromètres.

Le produit obtenu après cuisson et refroidissement est à nouveau broyé, jusqu'à présenter une granulométrie de 0 micromètres à 200 micromètres,

En outre, lesdits moyens de chauffage sont constitués d'un four à inclinaison et à vitesse variables équipé d'un brûleur modulaire. Lesdits moyens de refroidissement sont constitués d'un refroidisseur spécifique conçu de manière à confiner au maximum le produit pulvérulent refroidi et apte à interdire toute possibilité d'hydratation par contact dudit produit pulvérulent refroidi avec l'air ambiant.

Ces dispositions sont telles qu'à la suite d'un chauffage du matériau pulvérulent à une température constante et régulée comprise entre 150°C à 500°C à partir de la mise en oeuvre des moyens de chauffage sous une tension de vapeur saturante régulée et d'un refroidissement plus ou moins rapide du produit pulvérulent chauffé, il est possible d'obtenir un liant sulfatique présentant des performances mécaniques similaires à celles d'un plâtre semi-hydrate α. On notera que la tension de vapeur saturante est couramment de l'ordre de - 10 Pa.

Lesdits moyens de chauffage sont avantageusement constitués d'un four rotatif à double enveloppe fonctionnant en continu, ledit four étant un four à contact indirect continu, à contre courant. Ces dispositions sont telles qu'une homogénéité de cuisson du produit pulvérulent est assurée, à partir d'un maintien de vapeur saturante à l'intérieur du four régulée et d'un brassage du contenu du four par rotation de ce dernier.

Le four rotatif à double enveloppe comporte une enveloppe interne et une enveloppe externe cylindriques et coaxiales, à travers lesquelles sont ménagées au moins une entrée de produit pulvérulent et au moins une sortie de produit pulvérulent chauffé.

Le four rotatif est préférentiellement agencé en une enveloppe interne constituée d'une virole réalisée en inox réfractaire, en acier spécial au carbone ou matériau analogue et associée à une enveloppe externe isolée thermiquement pour la circulation d'un fluide chaud.

Le four rotatif est avantageusement équipé de moyens de mise en circulation entre les enveloppes interne et externe d'un fluide chaud qui s'écoule en sens inverse d'un sens d'écoulement dudit produit pulvérulent depuis ladite entrée vers ladite sortie.

Ces dispositions sont telles que le fluide chaud s'écoule à contre-courant du produit pulvérulent entre les enveloppes interne et externe de telle sorte qu'un échange de chaleur optimisé soit réalisé entre le fluide chaud et le produit pulvérulent. On notera que le fluide chaud est susceptible d'être constitué d'air chaud ou de gaz de combustion ou analogue dont la température est comprise entre 250°C et 650°C. On notera aussi que les moyens de mise en circulation du fluide chaud sont pourvus de moyens de recyclage du fluide chaud après circulation entre les enveloppes interne et externe.

De préférence, lesdits moyens de mise en circulation sont des moyens de mise en circulation hélicoïdale du fluide chaud entre lesdites enveloppes. Ces dispositions sont telles qu'elles permettent un échange de chaleur optimisé entre le fluide chaud et le produit pulvérulent.

De préférence encore, l'une quelconque au moins des enveloppes interne et externe est équipée d'au moins un plat de guidage du fluide chaud qui s'étend dans un espace interne ménagé entre les dites enveloppes.

II en ressort qu'une telle circulation du fluide chaud guidé par de tels plats de guidage provoque une circulation en chicane du fluide chaud entre les enveloppes interne et externe pour permettre un rendement de chauffage optimisé et un temps de traitement le plus court possible et finalement des économies d'énergie conséquentes.

Le four rotatif est avantageusement équipé de moyens de variation de sa vitesse de rotation. Ces dispositions sont telles que le four rotatif est apte à subir une rotation dont la fréquence est comprise entre 1 et 6 rotations par minute

Le four rotatif est préférentiellement équipé de pelles de brassage qui s'étendent radialement à l'intérieur d'un volume interne délimité par l'enveloppe interne. De telles pelles de brassage accessoirement associées à des pelles de contre-brassage sont préférentiellement conçues pour permettre le chauffage d'un gypse de nature relativement quelconque, voire d'un dérivé du gypse, pour permettre une cuisson homogène du produit pulvérulent.

Les pelles de brassage sont de préférence à hauteur réglable.

Le four rotatif est notamment équipé de moyens de collecte de poussières. Ces dispositions sont telles que l'installation permet une récupération des poussières de produit pulvérulent afin d'optimiser le rendement de l'installation à partir d'une limitation de la perte de produit pulvérulent sous la forme de poussière.

Le four rotatif est avantageusement équipé de moyens automatisés pour son alimentation en matériau pulvérulent au moins.

De préférence, les moyens automatisés d'alimentation du four en matériau pulvérulent au moins comprennent la trémie doseuse en relation avec l'entrée du four rotatif. Ces dispositions sont telles que la trémie est susceptible de contenir avantageusement des additifs minéraux en quantité modulable destinés à améliorer les performances mécaniques du produit obtenu.

La trémie est préférentiellement équipée d'un système de dévoûtage du produit pulvérulent au moins. Il en résulte que le four rotatif est alimenté de manière homogène en matériau pulvérulent au moins.

Lesdits moyens d'alimentation sont avantageusement associés à des moyens de régulation de l'alimentation du four en produit pulvérulent au moins.

On notera que de tels moyens de régulation de l'alimentation du four sont du type permettant un dosage volumétrique et/ou pondéral de l'alimentation du four garantissant une précision importante du débit d'alimentation, préférentiellement continu, du four rotatif en produit pulvérulent. Ces dispositions permettent de garantir la présence d'une masse contrôlée de produit pulvérulent à l'intérieur du four rotatif, en vue d'autoriser une cuisson régulière, uniforme et contrôlée du produit pulvérulent.

Le four rotatif est préférentiellement équipé de moyens de régulation d'une évacuation de vapeur saturante hors du four rotatif.

Ces dispositions sont telles que la déshydratation du produit pulvérulent est précisément contrôlée pour permettre sa cuisson sous une pression de vapeur saturante en vue de l'obtention d'un produit aux performances mécaniques améliorées.

Le four rotatif est notamment équipé de moyens de contrôle de la température du produit pulvérulent en sortie du four rotatif.

Ces moyens de contrôle sont préférentiellement associés à des moyens de commande de la mise en oeuvre de l'installation qui comprennent des moyens de mémoire de valeurs de consigne, telle qu'une température de chauffage du produit pulvérulent, une température de sortie du produit pulvérulent réchauffé, une température d'entrée du fluide chaud dans ledit espace interne et une température de sortie du fluide chaud hors dudit espace interne. Lesdits moyens de commande comprennent aussi de préférence des moyens de contrôle de la durée pendant laquelle le produit pulvérulent séjourne à l'intérieur du four rotatif.

De préférence, la sortie du four rotatif est équipée de moyens de mélange du produit pulvérulent chauffé avec les poussières collectées par lesdits moyens de collecte.

Il en découle une optimisation du rendement du traitement du matériau pulvérulent à partir d'une optimisation de la récupération de fines particules de matériau pulvérulent et le mélange de ces particules récupérées avec le matériau pulvérulent chauffé.

Les moyens de mélange sont par exemple constitués d'une vis mélangeuse pourvue de deux rotors à sens de rotation respectif inverse.

Ces dispositions sont telles qu'un mélange idoine est réalisé entre les particules récupérées et le produit pulvérulent chauffé, à partir d'un temps de séjour de ce mélange à l'intérieur de la vis mélangeuse qui est réduit au maximum, pour permettre éventuellement une cuisson directe des poussières au contact du matériau pulvérulent chauffé. On notera que le temps de séjour de ce mélange à l'intérieur de la vis mélangeuse est couramment de l'ordre de quelques minutes.

De préférence, le brûleur modulaire fonctionne indifféremment au gaz naturel, au fuel léger ou au fuel lourd pour la génération du fluide chaud.

Le four rotatif est par exemple incliné par rapport à un plan horizontal d'une pente variable entre 0% et 3%. Ces dispositions sont telles que l'écoulement du produit pulvérulent entre l'entrée et la sortie de produit pulvérulent est facilité.

Les moyens de refroidissement sont avantageusement constitués d'un refroidisseur à contact indirect. Il résulte de ces dispositions que le produit pulvérulent chauffé est plus ou moins rapidement refroidi sans affecter la stabilité dudit produit.

Le refroidisseur comporte préférentiellement une chambre cylindrique à l'intérieur de laquelle le produit pulvérulent réchauffé circule depuis une bouche d'arrivée vers une bouche de sortie, ladite chambre cylindrique étant équipée de faisceaux tubulaires coaxiaux à l'intérieur desquels circule un fluide froid. Ces dispositions sont telles que le produit pulvérulent réchauffé est refroidi de manière homogène lors de sa circulation à l'intérieur de la chambre.

La circulation du produit pulvérulent réchauffé à l'intérieur de la chambre cylindrique et la circulation du fluide froid à l'intérieur des faisceaux tubulaires s'effectuent de préférence selon un même sens de circulation. Ces dispositions sont telles que le produit pulvérulent est immédiatement refroidi dès son admission à l'intérieur de ladite chambre.

La chambre cylindrique est par exemple pourvue de pelles de relevage inclinées vers la bouche de sortie. Ces dispositions visent à faciliter l'écoulement du produit depuis la bouche d'entrée vers la bouche de sortie.

La chambre cylindrique est préférentiellement équipée de moyens pour sa mise en rotation autour de son axe de symétrie à des vitesses variables. Ces dispositions visent à contrôler le temps de séjour du produit pulvérulent chauffé à l'intérieur du refroidisseur.

Selon une autre forme de réalisation, les moyens de refroidissement comprennent un dispositif à effet venturi qui est en communication avec ladite sortie et qui est apte à induire une dépression en sortie du four. Ce dispositif à effet venturi est préférentiellement équipé de faisceaux tubulaires périphériques à l'intérieur desquels circule un fluide refroidi.

La bouche de sortie est de préférence en relation avec une vis sans fin pour acheminer le produit obtenu vers un mélangeur qui est en relation avec des moyens d'ajout d'additifs minéraux et/ou organiques. Ces dispositions visent à permettre la fabrication de liant multicomposants de propriété adaptées aux applications visées : ouvrabilité, résistances mécaniques tenue, à l'eau.

Le mélangeur est notamment équipé de moyens de confinement du produit obtenu. Ces dispositions sont telles que les moyens de confinement permettent d'éviter une hydratation du produit obtenu.

Selon une première variante, un procédé d'obtention d'un liant sulfatique multicomposants à hautes performances mécaniques, à partir de la mise en oeuvre d'une installation telle qu'elle vient d'être décrite est principalement reconnaissable en ce qu'il consiste à :
- Broyer le produit jusqu'à sa mise en poudre selon un fuseau granulaire propre à des gypses, aussi étroit que possible dans une gamme comprise entre, par exemple, 0 et 200 micromètres.
- chauffer le produit pulvérulent (gypses, plâtres auxquels sont ajoutés ou non un ou plusieurs additifs minéraux), à l'intérieur du four rotatif sous une tension de vapeur saturante et une dépression déterminées,
- refroidir le produit pulvérulent chauffé à l'intérieur d'un refroidisseur rotatif en confinant le produit pour réduire au maximum toute possibilité d'hydratation, par contact du produit pulvérulent avec l'air ambiant.
- mélanger des additifs minéraux et/ou organiques au produit ainsi obtenu.

Le produit pulvérulent est notamment l'un quelconque au moins d'un produit à base de gypse naturel, d'un produit à base de gypse chimique et d'un produit dérivé de ces derniers.

Des additifs minéraux et/ou organiques sont mélangés au produit fini dans des proportions déterminées en fonction des caractéristiques techniques du liant recherchées et de ses applications.

Des additifs organiques, tels que des superplastifiants, des retardateurs de prise, éventuellement des hydrofuges , et/ou des additifs minéraux sont de préférence mélangés au produit fini dans des proportions déterminées en fonction des caractéristiques techniques du liant sulfatique recherchées et de ses applications.

Les additifs minéraux, destinés à l'amélioration des caractéristiques rhéologiques et mécaniques du produit fini ainsi qu'à l'amélioration de sa durabilité, sont des ciments, sans limitation de nature et de composition, des chaux, sans limitation de nature et de composition , des laitiers granulés de haut fourneau, des cendres volantes, des fines calcaires, des fumées de silice, des métakaolins, d'autres formes d'anhydrites d'origine industrielle ou non, et tout autre additions d'origine naturelle ou industrielle qui améliore les propriétés du produit ou qui présente un intérêt économique et/ou écologique tel que la valorisation de sous-produits ou de déchets industriels.

Les additifs organiques sont des superplastifiants divers, tels que par exemple les polycarboxylates, disponibles sur le marché destinés à améliorer l'ouvrabilité et la mise en place des pâtes, mortiers et bétons élaborés à partir du liant, des retardateurs spécifiques destinés à réguler le temps de prise du liant, des hydrofuges (hydrofuges disponibles sur le marché et/ou corps gras divers, latex...).

Les additifs minéraux et organiques sont ajoutés au produit indifféremment soit à l'entrée du four soit au produit fini dans des proportions comprises entre 5 et 50 % pour les additifs minéraux selon leur nature minéralogique, et entre 0,05 et 10 % pour les additifs organiques, selon les propriétés recherchées.

Le liant sulfatique multicomposants à hautes performances mécaniques obtenu à partir de la mise en oeuvre d'une installation telle que décrite est principalement reconnaissable en ce qu'il est majoritairement constitué d'un plâtre d'anhydride III, auxquels sont ajoutés des additifs minéraux et/ou des additifs organiques au produit fini dans des proportions déterminées en fonction des caractéristiques techniques du liant sulfatique recherchées et de ses applications.

Un tel liant constitue avantageusement un capteur d'humidité de l'air apte à absorber l'humidité contenue dans les gaz de solvants organiques.

Un liant sulfatique multicomposants à hautes performances mécaniques, obtenu à l'aide de l'installation et d'un procédé selon une deuxième variante de réalisation, se caractérise par :
➢ Obtention d'un produit à base d'anhydrite III principalement en proportions variables à partir de gypses naturels ou de gypses industriels ou éventuellement de plâtres, par cuisson entre 250°C et 400°C.
➢ La granularité des gypses et éventuellement des plâtres utilisés pour la fabrication du produit de base A III est choisie de manière à obtenir un produit permettant l'optimisation des phénomènes de germination et de croissance cristalline au cours des réactions d'hydratation ;
➢ Une granularité adaptée et/ou spécifique, voisine d'une distribution monogranulaire, permet également d'obtenir un meilleur comportement rhéologique
➢ L'optimisation des phénomènes de germination/croissance est obtenue par l'addition de certains composés minéraux et/ou organiques. L'optimisation des phénomènes de germination/croissance permet d'obtenir des matériaux hydratés de microstructure compacte conduisant à d'excellentes propriétés mécaniques et à une durabilité accrue.
➢ Le type et les proportions des additions minérales sont adaptés à l'usage envisagé.
➢ En fonction de leur type et des propriétés souhaitées, les additions minérales peuvent être ajoutées avant cuisson ou mélangées à la sortie du four ;
➢ Aux additions minérales sont associées des additifs organiques destinés à moduler la prise et le durcissement des matériaux hydratés ainsi que leurs caractéristiques rhéologiques ;
➢ Les ensembles, produit de base Anhydrite III + addition(s) minérale(s) + additif(s) organique(s) sont sélectionnés de manière à assurer la meilleure encapsulation possible des cristaux de di-hydrate par les silicates hydratés résultant des différentes réactions d'hydratation entre les additions minérales (hydratation du ciment Portland et réactions pouzzolaniques) ;

Le liant sulfatique multicomposants à hautes performances mécaniques obtenu, est majoritairement constitué d' anhydrite III notamment, à laquelle sont ajoutés en tant que de besoin pendant la phase de transformation, certains additifs minéraux tels que par exemple la chaux ou les pouzzolanes, dans des proportions déterminées en fonction des caractéristiques techniques du liant sulfatique recherchées et de ses applications.

Le liant sulfatique multicomposants à hautes performances mécaniques constitue un capteur d'humidité apte à absorber l'humidité contenue dans les gaz de solvants organiques.

Le liant constitue un capteur de l'humidité de l'air nécessaire à la conservation et la protection de nombreux équipements de haute technologie dans leur emballage.

Les additifs minéraux et organiques sont ajoutés au produit soit à l'entrée du four soit au produit fini dans des proportions comprises entre 5 et 50 % pour les additifs minéraux selon leur nature minéralogique et entre 0,05 et 10 % pour les additifs organiques, selon les propriétés recherchées.

Les additifs minéraux destinés à l'amélioration des caractéristiques rhéologiques et mécaniques du produit fini ainsi qu'à l'amélioration de sa durabilité, peuvent être des ciments, sans limitation de nature et de composition, des chaux, sans limitation de nature et de composition , des laitiers granulés de haut fourneau, des cendres volantes, des fines calcaires, des fumées de silice, des métakaolins, d'autres formes d'anhydrites d'origine industrielle ou non, et tout autre additions d'origine naturelle ou industrielle pouvant améliorer les propriétés du produit ou pouvant avoir un intérêt économique et/ou écologique tel que la valorisation de sous-produits ou de déchets industriels.

Les additifs organiques sont des superplastifiants divers, tels que par exemple les polycarboxylates, disponibles sur le marché destinés à améliorer l'ouvrabilité et la mise en place des pâtes, mortiers et bétons élaborés à partir du liant, des retardateurs spécifiques destinés à réguler le temps de prise du liant, des hydrofuges (hydrofuges disponibles sur le marché et/ou corps gras divers, latex...).

Les proportions des différents constituants des liants, qui dépendent des applications visées et des propriétés souhaitées, peuvent être comprises entre les valeurs suivantes:
➢ A III: de 50 à 95%
➢ Chaux vive ou éteinte : 5 à 20 %
➢ Chaux hydraulique : 5 à 50 %
➢ Fumées de silice : 5 à 25 %
➢ Laitier granulé de haut fourneau : 10 à 30 %
➢ Pouzzolanes naturelles ou artificielles: 5 à 20 %
➢ Ciment CEM 1 : 5 à 25 %
➢ Adjuvant superplastifiant : 0,1 à 3 %
➢ Adjuvant retardateur : 0,05 à 3 %
➢ Hydrofuge : 2 à 6 %

A titre d'exemple, les proportions des différents constituants dans un mortier traditionnel comprenant un liant à base d'A III, à partir de duquel peuvent être déclinées d'autres formulations adaptées à des usages déterminés, pourraient être comprises entre les valeurs suivantes:
➢ AIII: 20 à 20%
➢ Chaux éteinte : 5 à 10 %
➢ Sable 0/2 mm : 75 à 85 %
➢ Superplastifiant : 0,5 à 2 %
➢ Retardateur : 0,05 à 0,2 %
➢ Rapport Eau/Liant : 0,40 à 0,45

Les résistances mécaniques en compression et en flexion de tels mortiers, mesurées sur éprouvettes 4 x 4 x 16 cm conservées à 20 ± 2°C et 50 % d'humidité relative, sont données dans le tableau suivant à titre indicatif :

| Echéances | Résistances à la compression (MPa) | Résistances à la flexion (MPa) |
|---|---|---|
| 6 heures | 18 à 30 | 3 à 5 |
| 3 jours | 20 à 30 | 3 à 5 |
| 7jours | 25 à 40 | 6 à 7 |
| 28 jours | 30 à 45 | ≈10 |

A titre d'exemple, dans la fabrication de chapes autolissantes les proportions des différents constituants peuvent être les suivantes:
➢ A III: 20 à 30%
➢ Chaux: 1 à 4%
➢ Laitier granulé de haut fourneau : 3 à 10 %
➢ Sable: 60 à 70%
➢ Superplastifiant 1 à 2 %
➢ Retardateur : 0,1 à 0,3 %
➢ Rapport Eau/liant : 0, 45 à 0,55

Ce type de chape montre une bonne résistance à l'eau.

Les résistances mécaniques en compression et en flexion de telles chapes sont données dans le tableau suivant à titre indicatif :

| Echéances | Résistances à la compression (MPa) | Résistances à la flexion (MPa) |
|---|---|---|
| 6 heures | 20 à 25 | 3 à 4 |
| 24 heures | 20 à 25 | 3 à 4 |
| 3 jours | 20 à 25 | 3 à 4 |
| 7jours | 25 à 35 | 5 à 7 |
| 28 jours | 30 à 45 | 8 à 10 |

Dans la réalisation d'éléments légers, les granulats traditionnels peuvent être remplacés par des granulats légers de type argile expansée, vermiculite, ponces, polystyrène expansé, etc....

De même dans le but d'accroître la ductilité des éléments fabriqués (panneaux, dalles ...), des fibres naturelles, synthétiques (verre, polypropylène, carbone...) ou métalliques peuvent être ajoutées aux produits.

La granularité des gypses et éventuellement des plâtres utilisés pour la fabrication du produit de base AIII dont l'étendue est conçue de manière à obtenir un fuseau granulaire aussi étroit que possible dans une gamme comprise entre 0,03 mm et 1 mm environ. Une telle granulométrie permet d'obtenir un bon comportement rhéologique. Elle permet également d'améliorer les processus de germination et de croissance cristalline lors de l'hydratation du produit par une distribution plus homogène des sites à partir desquels se développent les cristaux de dihydrate dont la forme et l'assemblage déterminent les propriétés, notamment les propriétés mécaniques, du matériau hydraté. Ces sites sont constitués de « whiskers » caractéristiques du processus d'hydratation de l'AIII. Ces « whiskers » constituent les amorces à partir desquelles se développe la microstructure du matériau.

L'optimisation des processus de germination et croissance cristalline peut être obtenue également par l'adjonction au produit fini de particules très fines telles que par exemple des microsilices ou des fines calcaires. Elle peut être obtenue également par l'adjonction de produit organiques tels que par exemple les polycarboxylates utilisés comme superplastifiants et/ou par la régulation des phénomènes de prise et de durcissement à l'aide d'adjuvants retardateurs.

### Description des figures.

La présente invention sera mieux comprise, et des détails en relevant apparaîtront, à la lecture de la description qui va être faite de variantes de réalisation en relation avec les figures des planches annexées, dans lesquelles :
La fig.1 est une illustration schématique d'une installation pour la production d'un liant sulfatique selon la présente invention.
La fig.2 est une illustration schématique en coupe radiale d'un four rotatif constitutif de l'installation représentée sur la fig.1,
La fig.3 est une illustration schématique en coupe longitudinale du four rotatif représenté sur la fig.2,
La fig.4 est une illustration schématique en coupe radiale d'une première variante de réalisation d'un refroidisseur constitutif de l'installation représentée sur la fig.1, La fig.5 est une illustration schématique en coupe longitudinale du refroidisseur représenté sur la fig.4,
La fig.6 est une illustration schématique en coupe longitudinale d'une deuxième variante de réalisation du refroidisseur.

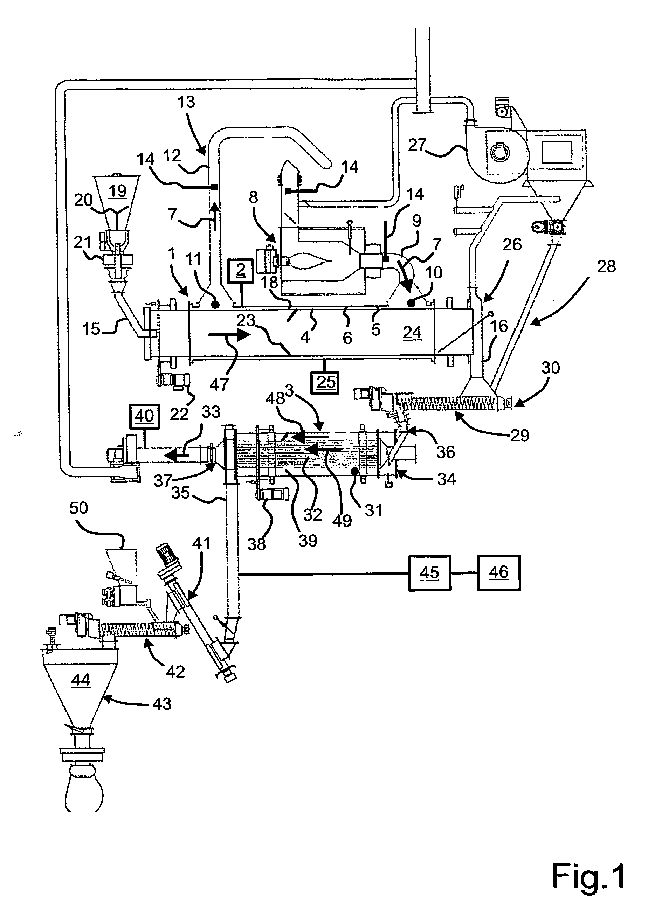

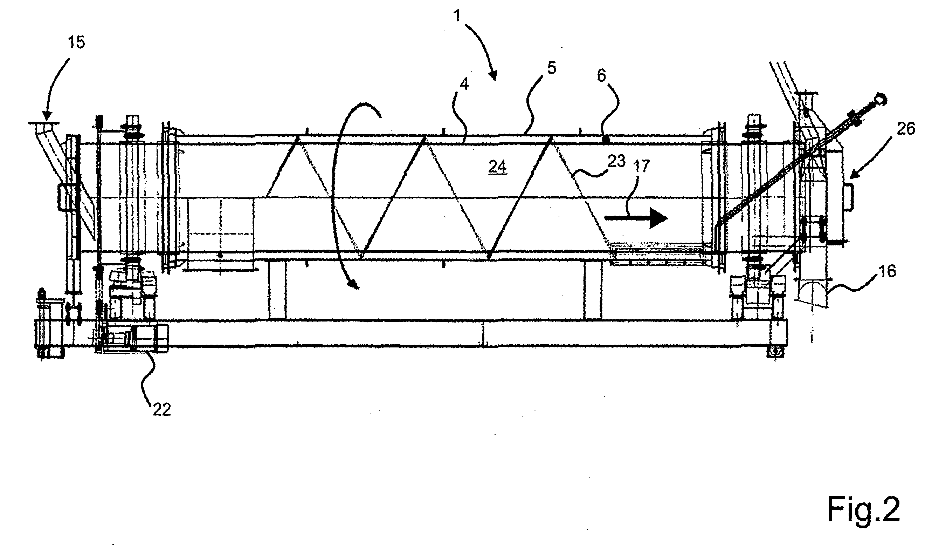

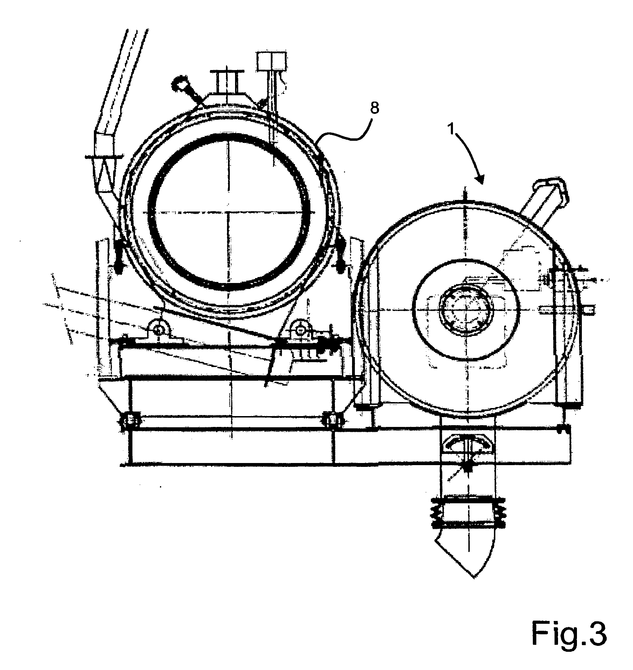

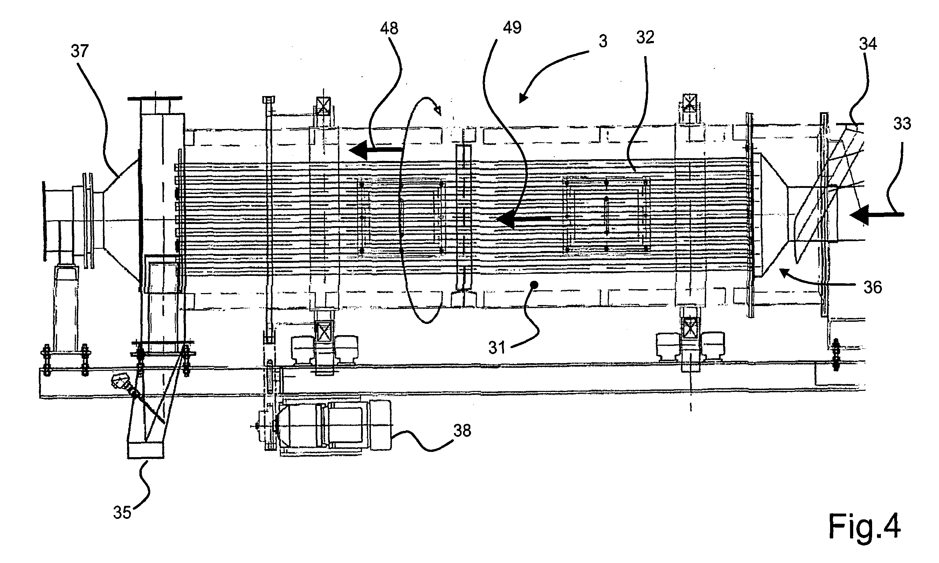

Sur les fig.1 à fig.5, une installation pour la production d'un liant sulfatique à partir d'un produit pulvérulent est destinée à être mise en oeuvre pour obtenir un liant présentant des caractéristiques mécaniques importantes. Plus particulièrement, cette installation est apte à produire un plâtre dont les caractéristiques de dureté sont proches de celles d'un plâtre semi-hydrate α, cette installation étant simple à mettre en oeuvre, peu consommatrice d'énergie, rejetant peu de gaz à effet de serre et présentant néanmoins un rendement optimisé. Dans sa généralité, l'installation comprend avantageusement des moyens de broyage permettant d'obtenir un fuseau granulaire déterminé notamment à des gypses, et un four rotatif 1 qui est équipé de moyens de maintien 2 d'une tension de vapeur saturante et d'une dépression déterminées à l'intérieur du four rotatif 1 et qui est associé à un refroidisseur 3.

Le four rotatif 1 est du type à double enveloppe cylindriques et coaxiales, dont une enveloppe interne 4 et une enveloppe externe 5. Entre les enveloppes interne 4 et externe 5, est ménagé un espace interne 6 à l'intérieur duquel circule un fluide chaud 7. Ce dernier 7 est produit par un brûleur modulaire 8 indifféremment du type fonctionnant au gaz naturel, au fuel léger ou au fuel lourd, voire par tout autre moyen analogue permettant la génération d'un fluide chaud 7. Le fluide chaud 7 produit par le brûleur modulaire 8 circule à travers un canal de circulation 9 de fluide chaud 7 qui est ménagé entre le brûleur modulaire 8 et le four rotatif 1, puis pénètre à l'intérieur de l'espace interne 6 à travers une ouverture d'admission 10 pour s'écouler à l'intérieur de l'espace interne 6 jusqu'à une ouverture d'évacuation 11 qui est en relation avec un conduit de circulation 12 de fluide chaud 7. Ce conduit de circulation 12 est également en relation avec le brûleur modulaire de sorte que le fluide chaud 7 est recyclé en sortie du four rotatif 1 vers le brûleur modulaire 8, pour diminuer la consommation énergétique de l'installation et finalement pour optimiser son rendement. L'espace interne 6, le canal 9 et le conduit 12 de circulation du fluide chaud sont constitutifs d'un circuit de circulation 13 de fluide chaud 7 qui est équipé d'une pluralité de capteurs de température 14 du fluide chaud 7 de manière à réguler la puissance calorifique fournie par le brûleur modulaire 8, en vue de diminuer la consommation énergétique de l'installation et optimiser son rendement.

Le four rotatif 1 est pourvu d'une entrée 15 de produit pulvérulent et d'une sortie 16 de produit pulvérulent chauffé qui sont ménagées à travers lesdites enveloppes 4,5. Plus particulièrement, selon un sens 47 d'écoulement du produit pulvérulent entre ladite entrée 15 et ladite sortie 16, ladite entrée 15 est ménagée en amont de l'ouverture d'évacuation 11 du fluide chaud 7, tandis que la dite sortie 16 est ménagée en aval de l'ouverture d'admission 10 du fluide chaud 7. Il en ressort que le fluide chaud 7 et le produit pulvérulent circulent à l'intérieur du four rotatif 1 selon des sens opposés, à partir de la mise en oeuvre de moyens de mise en circulation 17 du fluide chaud 7 à l'intérieur du circuit de circulation 13. Préférentiellement, ces moyens de mise en circulation 17 sont des moyens de mise en circulation hélicoïdale du fluide chaud 7 comprenant au moins un plat de guidage 18 de ce dernier 7 à l'intérieur de l'espace interne 6. Ces dispositions visent à permettre une cuisson homogène et contrôlée du produit pulvérulent.

L'entrée 15 de produit pulvérulent est en relation avec une trémie d'alimentation 19 du four rotatif 1 en produit pulvérulent, du type gypse naturel, gypse chimique, voire d'un dérivé au moins de ces derniers. On notera que ce produit pulvérulent est susceptible d'être mélangé à au moins un additif, minéral ou organique, pour améliorer les caractéristiques mécaniques du produit finalement obtenu. A titre d'exemple non limitatif, un tel additif comporte majoritairement de la pouzzolane.

La trémie d'alimentation 19 est équipée d'un système de dévoûtage 20 du produit pulvérulent qu'elle contient de sorte que l'alimentation en produit pulvérulent du four rotatif 1 est réalisée de manière homogène et préférentiellement continue. De plus, la trémie d'alimentation 19 est équipée de moyens de régulation 21 pondérale et volumétrique de l'alimentation du four rotatif 1 en produit pulvérulent. Ces dispositions visent à garantir la présence d'une masse et d'un volume contrôlé de produit pulvérulent à l'intérieur du four rotatif 1, en vue d'optimiser le rendement de l'installation.

L'enveloppe interne 4 du four rotatif 1 est entrainée en rotation sur elle-même par l'intermédiaire d'un moteur 22 permettant une variation de la vitesse de rotation de l'enveloppe interne 4 entre des fréquences comprises entre une et six rotations par minute. Ces dispositions permettent une cuisson homogène du produit pulvérulent. Pour améliorer encore l'homogénéité de la cuisson du produit pulvérulent, la paroi interne de l'enveloppe interne 4 est équipée de pelles de brassage 23 qui s'étendent radialement à l'intérieur d'un volume interne 24 du four rotatif 1 que l'enveloppe interne 4 délimite. Pour permettre la cuisson d'un produit pulvérulent de nature relativement quelconque, les pelles de brassage 23 sont à hauteur réglable.

Le four rotatif 1 est préférentiellement incliné par rapport à un plan horizontal P, par exemple d'une pente de l'ordre de 3%, cette pente étant variable entre 0% et 3%. Plus précisément, l'entrée 15 est plus éloignée du plan P que la sortie 16. Ces dispositions visent à adapter le temps de séjour du produit pulvérulent à l'intérieur du four rotatif 1, notamment en fonction de la nature du produit pulvérulent.

Le four rotatif 1 est par ailleurs équipé de moyens de régulation 25 d'une évacuation de vapeur saturante hors du volume interne 24 du four rotatif 1. Il en ressort que la déshydratation et/ou la cuisson du produit pulvérulent est aisément adaptable à la nature relativement quelconque du produit pulvérulent.

Le four rotatif 1 est en relation avec des moyens de collecte 26 de poussières comprenant un ventilateur 27 placé sur un circuit de collecte 28 des poussières. Ce circuit de collecte 28 est en communication aéraulique avec une vis mélangeuse 29 qui est également en communication avec la sortie 16 de produit pulvérulent chauffé. La vis mélangeuse 29 permet de malaxer le produit pulvérulent chauffé aux poussières collectées pour optimiser le rendement de ladite installation. La vis mélangeuse 29 est par exemple pourvue de deux rotors 30 dont les sens de rotation respectifs sont inverses l'un de l'autre pour améliorer la qualité du mélange entre le produit chauffé et les poussières collectées.

La vis mélangeuse 29 est en relation avec le refroidisseur 3. Ce dernier 3 est préférentiellement un refroidisseur à contact indirect.

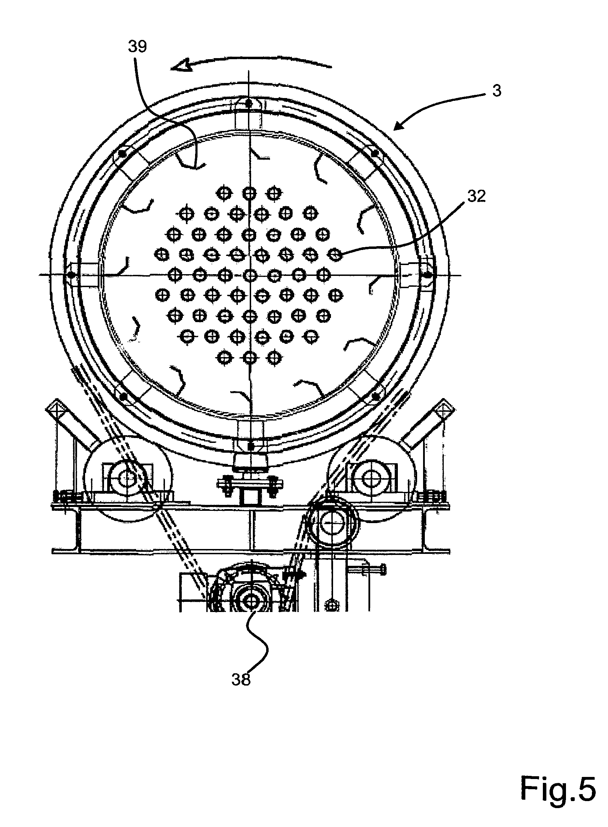

Selon une première variante de réalisation du refroidisseur 3 représentée sur la fig.5, le refroidisseur 3 comporte une chambre cylindrique 31 qui est équipée d'une pluralité de faisceaux tubulaires 32 coaxiaux à la chambre cylindrique 31 à l'intérieur desquels circule un fluide froid 33. Ce dernier 33 est indifféremment de nature gazeuse ou liquide, eau froide notamment. A l'intérieur du refroidisseur 3, le produit pulvérulent circule depuis une bouche d'arrivée 34 vers une bouche de sortie 35 qui sont respectivement ménagées à proximité d'une arrivée de fluide froid 36 et d'une sortie de fluide froid 37, que comporte chacun des faisceaux tubulaires 32. Il en ressort qu'à l'intérieur du refroidisseur 3, les sens 48,49 d'écoulement respectifs du produit pulvérulent chauffé et du fluide froid 33 sont identiques.

Pour optimiser le refroidissement du produit pulvérulent chauffé, la chambre cylindrique 31 du refroidisseur 3 est mobile en rotation autour de son axe de symétrie par l'intermédiaire de la mise en oeuvre d'un moteur 38, la chambre cylindrique 31 étant pourvue de pelles de relevage 39 qui sont préférentiellement inclinées vers la bouche de sortie 35 du refroidisseur 3. Le refroidisseur 3 est par ailleurs pourvu de moyens de régulation 40 de la température de sortie du fluide froid 33 hors du refroidisseur 3, pour améliorer le refroidissement d'un matériau pulvérulent de nature relativement quelconque.

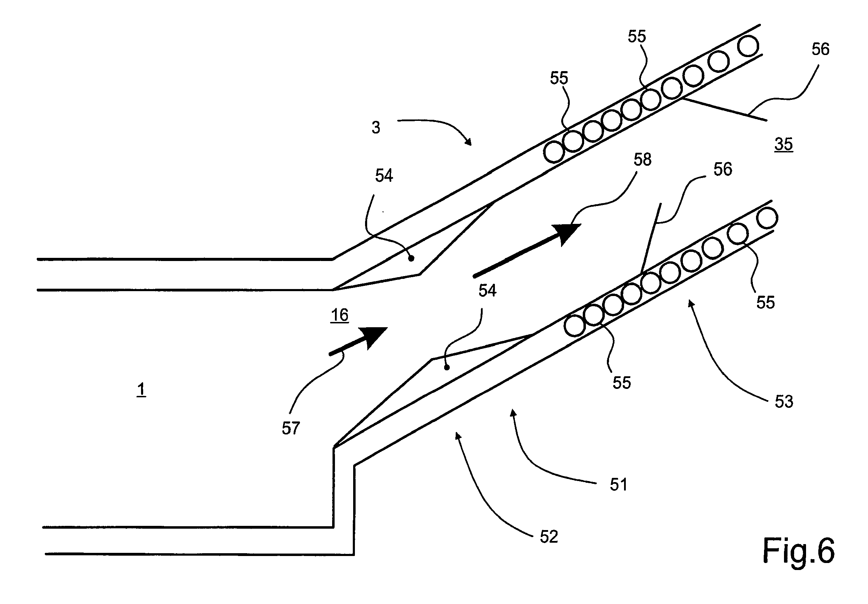

Selon une deuxième variante de réalisation du refroidisseur 3 représentée sur la fig.6, le refroidisseur 3 comporte un dispositif à effet venturi 51 en communication avec la sortie 16 du four rotatif 1. Ledit dispositif 51 comporte une zone amont 52 en relation avec la dite sortie 16 et une zone aval 53. La zone amont 52 est équipée d'uh manchon 54 d'isolation thermique qui est agencé de manière à générer une dépression 57 en sortie du four et une accélération 58 à l'intérieur de la zone aval 53. La zone aval 53 est équipée de tubulures périphériques 55 à l'intérieur desquels circule un fluide refroidi, tel que de l'azote liquide. Les tubulures périphériques 55 sont de plus en plus éloignées les unes des autres depuis la sortie 16 du four rotatif 1 vers la bouche de sortie 35 du refroidisseur 3. La zone aval 53 constitue une zone de trempe du produit pulvérulent chauffé. Pour améliorer la qualité du produit obtenu, la zone aval 53 est équipée de volets de régulation 56 à position réglable.

En se reportant à nouveau sur la fig.1, la bouche de sortie 35 du refroidisseur 3 est en relation avec une vis sans fin 41 pour acheminer le produit obtenu vers un mélangeur 42. Ce dernier 42 est destiné à permettre un ajout d'additifs au produit obtenu, tels que de la chaux, de la pouzzolane ou tout autre additif de nature minérale ou organique notamment. Cet ajout s'effectue par exemple par l'intermédiaire d'une trémie complémentaire 50. Le mélangeur 42 est équipé de moyens de confinement 43 du produit obtenu, telle qu'une ensacheuse pourvue d'une trémie de collecte 44 du produit obtenu, éventuellement complété d'additifs.

Pour garantir une sécurité de fonctionnement de l'installation, cette dernière est équipée de moyens d'alerte 45, indifféremment sonores et/ou visuels, qui sont mis en oeuvre lorsqu'une information du type température ou vitesse de rotation s'écarte d'une valeur de consigne préalablement mémorisée. Ces moyens d'alerte 45 sont notamment en relation avec des moyens de contrôle 46 de la température du produit pulvérulent chauffé en sortie du four rotatif 1.

## Revendications

1. Installation pour la production d'un liant sulfatique à base d'anhydrite III à partir d'un produit pulvérulent, cette installation comprenant une trémie doseuse (19), des moyens de chauffage (1) du produit pulvérulent et des moyens de refroidissement (3) du produit pulvérulent chauffé, **caractérisée :**
**en ce que** lesdits moyens de chauffage (1) et de refroidissement (3) sont associés à :
- des moyens de broyage aptes à l'obtention du produit pulvérulent selon un fuseau granulaire propre à des gypses, compris entre 0 et 5 mm,
- des moyens de maintien (2) d'une tension de vapeur saturante et d'une dépression déterminées à l'intérieur desdits moyens de chauffage (1), comprise entre - 10 et - 30 Pa,
**en ce que** lesdits moyens de chauffage (1) sont constitués d'un four à inclinaison et à vitesse variables équipé d'un brûleur modulaire (8),
**en ce que** lesdits moyens de refroidissement (3) sont constitués d'un refroidisseur comprenant une chambre de confinement permettant de confiner au maximum le produit pulvérulent refroidi et apte à interdire toute possibilité d'hydratation par contact dudit produit pulvérulent refroidi avec l'air ambiant,
- et des moyens de broyage pour, après cuisson et refroidissement du produit obtenu, broyer ce produit obtenu jusqu'à présenter une granulométrie de 0 à 200 microns, voire entre 0 et 500 microns.

2. Installation selon la revendication précédente, **caractérisée en ce que** lesdits moyens de chauffage (1) sont constitués d'un four rotatif à double enveloppe fonctionnant en continu, ledit four étant un four à contact indirect continu, à contre courant.

3. Installation selon la revendication 2, **caractérisée en ce que** le four rotatif (1) à double enveloppe comporte une enveloppe interne (4) et une enveloppe externe (5) cylindriques et coaxiales, à travers lesquelles sont ménagées au moins une entrée (15) de produit pulvérulent et au moins une sortie (16) de produit pulvérulent chauffé.

4. Installation selon la revendication 3, **caractérisée en ce que** le four rotatif (1) est équipé de moyens de mise en circulation (17) entre les enveloppes interne (4) et externe (5) d'un fluide chaud (7) qui s'écoule en sens inverse d'un sens d'écoulement (47) dudit produit pulvérulent depuis ladite entrée (15) vers ladite sortie (16).

5. Installation selon la revendication 4, **caractérisée en ce que** lesdits moyens de mise en circulation (17) sont des moyens de mise en circulation hélicoïdale du fluide chaud (7) entre lesdites enveloppes (4,5).

6. Installation selon l'une quelconque des revendications 4 et 5, **caractérisée en ce que** l'une quelconque au moins des enveloppes interne (4) et externe (5) est équipée d'au moins un plat de guidage (18) du fluide chaud (7) qui s'étend dans un espace interne (6) ménagé entre les dites enveloppes (4,5).

7. Installation selon l'une quelconque des revendications 2 à 6, **caractérisée en ce que** le four rotatif (1) est équipé de moyens de variation (22) de sa vitesse de rotation dont la fréquence est comprise entre 1 et 6 rotations minute.

8. Installation selon l'une quelconque des revendications 3 à 7, **caractérisée en ce que** le four rotatif (1) est équipé de pelles de brassage (23) qui s'étendent radialement à l'intérieur d'un volume interne (24) délimité par l'enveloppe interne (4).

9. Installation selon la revendication 8, **caractérisée en ce que** les pelles de brassage (23) sont à hauteur réglable.

10. Installation selon l'une quelconque des revendications 2 à 9, **caractérisée en ce que** le four rotatif (1) est équipé de moyens de collecte (26) de poussières.

11. Installation selon l'une quelconque des revendications 2 à 10, **caractérisée en ce que** le four rotatif (1) est équipé de moyens automatisés pour son alimentation en matériau pulvérulent au moins.

12. Installation selon la revendication 11, **caractérisée en ce que** les moyens automatisés d'alimentation du four en matériau pulvérulent au moins comprennent la trémie doseuse (19) en relation avec l'entrée (15) du four rotatif (1).

13. Installation selon l'une quelconque des revendications précédentes, **caractérisée en ce que** la trémie doseuse (19) est équipée d'un système de dévoûtage (20) du produit pulvérulent au moins.

14. Installation selon l'une quelconque des revendications 11 à 13, **caractérisée en ce que** lesdits moyens d'alimentation sont associés à des moyens de régulation (21) de l'alimentation du four en produit pulvérulent au moins.

15. Installation selon l'une quelconque des revendications 2 à 14, **caractérisée en ce que** le four rotatif (1) est équipé de moyens de régulation (25) d'une évacuation de vapeur saturante hors du four rotatif (1).

16. Installation selon l'une quelconque des revendications 2 à 15, **caractérisée en ce que** le four rotatif (1) est équipé de moyens de contrôle (46) de la température du produit pulvérulent en sortie du four rotatif (1).

17. Installation selon l'une quelconque des revendications 10 à 16, **caractérisée en ce que** la sortie (16) du four rotatif (1) est équipée de moyens de mélange (29) du produit pulvérulent chauffé avec les poussières collectées par lesdits moyens de collecte (26).

18. Installation selon la revendication 17, **caractérisée en ce que** les moyens de mélange (29) sont constitués d'une vis mélangeuse pourvue de deux rotors (30) à sens de rotation respectif inverse.

19. Installation selon l'une quelconque des revendications 4 à 18, **caractérisée en ce que** le brûleur modulaire (8) fonctionne indifféremment au gaz naturel, au fuel léger ou au fuel lourd pour la génération du fluide chaud (7).

20. Installation selon l'une quelconque des revendications 2 à 19, **caractérisée en ce que** le four rotatif (1) est incliné par rapport à un plan horizontal (P) d'une pente variable entre 0% et 3%.

21. Installation selon l'une quelconque des revendications précédentes, **caractérisée en ce que** les moyens de refroidissement (3) sont constitués d'un refroidisseur à contact indirect.

22. Installation selon la revendication 21, **caractérisée en ce que** le refroidisseur (3) comporte une chambre cylindrique (31) à l'intérieur de laquelle le produit pulvérulent réchauffé circule depuis une bouche d'arrivée (34) vers une bouche de sortie (35), ladite chambre cylindrique (31) étant équipée de faisceaux tubulaires (32) coaxiaux à l'intérieur desquels circule un fluide froid (33).

23. Installation selon la revendication 22, **caractérisée en ce que** la circulation du produit pulvérulent réchauffé à l'intérieur de la chambre cylindrique (31) et la circulation du fluide froid (33) à l'intérieur des faisceaux tubulaires (32) s'effectuent selon un même sens de circulation (48,49).

24. Installation selon l'une quelconque des revendications 22 et 23, **caractérisée en ce que** la chambre cylindrique (31) est pourvue de pelles de relevage (39) inclinées vers la bouche de sortie (35).

25. Installation selon l'une quelconque des revendications 22 à 24, **caractérisée en ce que** la chambre cylindrique (31) est équipée de moyens pour sa mise en rotation (38) autour de son axe de symétrie à des vitesses variables.

26. Installation selon l'une quelconque des revendications 1 à 20, **caractérisée en ce que** les moyens de refroidissement (3) comprennent un dispositif à effet venturi (51) qui est en communication avec ladite sortie (16) et qui est apte à induire une dépression en sortie du four.

27. Installation selon la revendication 26, **caractérisée en ce que** le dispositif à effet venturi est équipé de faisceaux tubulaires périphériques à l'intérieur desquels circule un fluide refroidi.

28. Installation selon l'une quelconque des revendications 22 à 27, **caractérisée en ce que** la bouche de sortie (35) est en relation avec une vis sans fin (41) pour acheminer le produit obtenu vers un mélangeur (42) qui est en relation avec des moyens d'ajout (50) d'un additif au moins.

29. Installation selon la revendication 28, **caractérisée en ce que** le mélangeur (42) est équipé de moyens de confinement (43) du produit obtenu.

30. Procédé d'obtention d'un liant sulfatique à base d'anhydrite III à partir de la mise en oeuvre d'une installation selon l'une quelconque des revendications précédentes, **caractérisé en ce qu'**il consiste à :
- broyer le produit jusqu'à sa mise en poudre selon un fuseau granulaire propre à des gypses, comprise entre 0 et 5mm,
- chauffer le produit pulvérulent à l'intérieur du four rotatif (1) sous une tension de vapeur saturante et une dépression déterminées, comprise entre - 10 et - 30 Pa,
- refroidir le produit pulvérulent chauffé à l'intérieur d'un refroidisseur rotatif (3) comprenant une chambre de confinement, en confinant le produit pour réduire au maximum toute possibilité d'hydratation,
- broyer à nouveau le produit obtenu jusqu'à présenter une granulométrie de 0 à 200 microns, voire entre 0 et 500 microns.

31. Procédé selon la revendication 30, **caractérisé en ce que** le produit pulvérulent est l'un quelconque au moins d'un produit à base de gypse naturel, d'un produit à base de gypse chimique et d'un produit dérivé de ces derniers.

32. Procédé selon l'une quelconque des revendications 30 et 31, **caractérisé en ce que** des additifs minéraux et/ou additifs organiques sont ajoutés soit à l'entrée du four soit au produit fini dans des proportions comprises entre 5 et 50 % pour les additifs minéraux selon leur nature minéralogique et entre 0,05 et 10 % pour les additifs organiques, selon les propriétés recherchées du liant recherché et de ses applications

33. Procédé selon la revendication 32, **caractérisé en ce que** les additifs minéraux sont choisies parmi les produits les plus divers comprenant les ciments, sans limitation de nature et de composition, les chaux, sans limitation de nature et de composition, les laitiers granulés de haut fourneau, les cendres volantes, les fines calcaires, les fumées de silice, les métakaolins, les autres formes d'anhydrites d'origine industrielle ou non, et toutes autres additions d'origine naturelle ou industrielle pouvant améliorer les propriétés du produit ou pouvant avoir un intérêt économique et/ou écologique tel que la valorisation de sous-produits ou de déchets industriels.

34. Procédé selon l'une quelconque des revendications 30 à 33, **caractérisé en ce que** les additifs organiques sont des superplastifiants divers, tels que par exemple les polycarboxylates, des retardateurs spécifiques, des hydrofuges (hydrofuges disponibles sur le marché et/ou corps gras divers, latex...).

35. Procédé selon l'une quelconque des revendications 30 à 33, **caractérisé en ce que** les additifs organiques sont des superplastifiants divers, tels que par exemple les polycarboxylates, des retardateurs spécifiques, des hydrofuges (hydrofuges disponibles sur le marché et/ou corps gras divers, latex...).

36. Procédé selon l'une quelconque des revendications 30 à 35, **caractérisé en ce que** les additifs minéraux et organiques sont ajoutés au produit indifféremment soit à l'entrée du four soit au produit fini dans des proportions comprises entre 5 et 50 % pour les additifs minéraux selon leur nature minéralogique et entre 0,05 et 10 % pour les additifs organiques, selon les propriétés recherchées.

37. Liant sulfatique multicomposants à hautes performances mécaniques, obtenu à partir de la mise en oeuvre d'un procédé selon l'une quelconque des revendications 30 à 36, **caractérisé en ce qu'**il est obtenu suivant un fuseau granulaire déterminé dans l'intervalle 0 et 5 mm où le processus de germination/croissance cristalline au cours de l'hydratation sont maîtrisés de manière à obtenir des matériaux hydratés de compacité optimisée, majoritairement constitué d'Anhydrite III, à laquelle sont ajoutés en tant que de besoin, des additifs minéraux (chaux, pouzzolanes par exemple) pendant la phase de transformation, et des additifs minéraux et/ou organiques, au produit fini, dans des proportions déterminées en fonction des caractéristiques techniques du liant sulfatique recherchées et de ses applications.

38. Liant sulfatique multicomposants à hautes performances mécaniques conforme à la revendication 38, **caractérisé en ce qu'**il constitue un capteur d'humidité apte à absorber l'humidité contenue dans les gaz et solvants organiques

39. Liant sulfatique multicomposants à hautes performances mécaniques conforme à la revendication 39, **caractérisé en ce qu'**il constitue un capteur de l'humidité de l'air nécessaire à la conservation et la protection de nombreux équipements de haute technologie dans leur emballage.

## Claims

**1.** Facility for producing an anhydrite III-based sulphate binder from a powder product, said facility comprising a metering hopper (19), means for heating (1) the powder product and means for cooling (3) the heated powder product, **characterised:**
**in that** said heating (1) and cooling (3) means are associated with:
- grinding means suitable for obtaining the powder product according to a grain size range specific to gypsums, between 0 and 5 mm.
- means for maintaining (2) a predetermined saturating vapour tension and negative pressure inside said heating means (1), between -10 and -30 Pa,
**in that** said heating means (1) consist of a variable angle and speed furnace equipped with a modular burner (8),
**in that** said cooling means (3) consist of a cooler comprising a confinement chamber for confining the cooled powder product as much as possible and
suitable for preventing any possibility of hydration due to contact of said cooled powder product with ambient air,
- and grinding means for, after firing and cooling the product obtained, grinding said product obtained up to a grain size of 0 to 200 microns, or between 0 and 500 microns.

**2.** Facility according to the above claim, **characterised in that** said heating means (1) consist of a continuously operating double-walled rotary furnace, said furnace being a counter-flow continuous indirect contact furnace.

**3.** Facility according to claim 2, **characterised in that** the double-walled rotary furnace (1) comprising an inner shell (4) and an outer shell (5) which are cylindrical and coaxial, through which at least one powder product inlet (15) and at least one heated powder product outlet (16) are provided.

**4.** Facility according to claim 3, **characterised in that** the rotary furnace (1) is equipped with means for circulating (17) between the inner (4) and outer (5) shells a hot fluid (7) flowing in the opposite direction to a flow direction (47) of said powder product from said inlet (15) to said outlet (16).

**5.** Facility according to claim 4, **characterised in that** said circulation means (17) are helical means for circulating the hot fluid (7) between said shells (4,5).

**6.** Facility according to any of claims 4 and 5, **characterised in that** at Least any one of the inner (4) and outer (5) shells is equipped with at least one face for guiding (18) the hot fluid (7) extending into an internal space (6) provided between said shells (4,5).

**7.** Facility according to any of claims 2 to 6, **characterised in that** the rotary furnace (1) is equipped with means for varying (22) the rotational speed thereof, the frequency of which is between 1 and 6 rpm.

**8.** Facility according to any of claims 3 to 7, **characterised in that** the rotary furnace (1) is equipped with mixing shovels (23) extending radially inside an inner volume (24) defined by the inner shell (4).

**9.** Facility according to claim 8, **characterised in that** the mixing shovels (23) have an adjustable height.

**10.** Facility according to any of claims 2 to 9, **characterised in that** the rotary furnace (1) is equipped with dust collection means (26).

**11.** Facility according to any of claims 2 to 10, **characterised in that** the rotary furnace (1) is equipped with automated means for the supply thereof with at least powder material.

**12.** Facility according to claim 11, **characterised in that** the automated means for supplying the furnace with at least powder material comprise a metering hopper (19) connected with the inlet (15) of the rotary furnace (1).

**13.** Facility according to any of the above claims, **characterised in that** the metering hopper (19) is equipped with a system for deculverting (20) at east the powder product.

**14.** Facility according to any of claims 11 to 13, **characterised in that** said supply means are associated with means for controlling (21) the supply of the furnace with at least powder product.

**15.** Facility according to any of claims 2 to 14, **characterised in that** the rotary furnace (1) is equipped with means for controlling (25) a saturating vapour discharge from the rotary furnace (1).

**16.** Facility according to any of claims 2 to 15, **characterised in that** the rotary furnace (1) is equipped with means for monitoring (46) the temperature of the powder product at the outlet of the rotary furnace (1).

**17.** Facility according to any of claims 10 to 16, **characterised in that** the outlet (16) of the rotary furnace (1) is equipped with means for mixing (29) the heated powder product with the dust collected by said collection means (26).

**18.** Facility according to claim 17, **characterised in that** the mixing means (29) consist of a mixing screw provided with two rotors (30) rotating in opposite directions.

**19.** Facility according to any of claims 4 to 18, **characterised in that** the modular burner (8) runs equally well with natural gas, domestic fuel or heavy gas oil for generating the hot fluid (7).

**20.** Facility according to any of claims 2 to 19, **characterised in that** the rotary furnace (1) is inclined in relation to a horizontal plane (P) by a variable slope between 0% and 3%.

**21.** Facility according to any of the above claims, **characterised in that** the cooling means (3) consist of an indirect contact cooler.

**22.** Facility according to claim 21, **characterised in that** the cooler (3) comprises a cylindrical chamber (31) inside which the heated powder product circulates from an inlet orifice (34) to an outlet orifice (35), said cylindrical chamber (31) being equipped with coaxial tubular bundles (32) inside which a cold fluid (33) circulates.

**23.** Facility according to claim 22, **characterised in that** the circulation of the heated powder product inside the cylindrical chamber (31) and the circulation of the cold fluid (33) inside the tubular bundles (32) are performed in the same direction of circulation (48,49).

**24.** Facility according to any of claims 22 and 23, **characterised in that** the cylindrical chamber (31) is provided with lifting shovels (39) inclined towards the outlet orifice (35),

**25.** Facility according to any of claims 22 to 24, **characterised in that** the cylindrical chamber (31) is equipped with means for the rotation (38) thereof about the axis of symmetry thereof at variable speeds.

**26.** Facility according to any of claims 1 to 20, **characterised in that** the cooling means (3) comprise a Venturi effect device (51) connected with said outlet (16) and suitable for inducing a negative pressure at the furnace outlet.

**27.** Facility according to claim 26, **characterised in that** the Venturi effect device is equipped with peripheral tubular bundles wherein a cooled fluid circulates.

**28.** Facility according to any of claims 22 to 27, **characterised in that** the outlet orifice (35) is linked with an endless screw (41) to convey the product obtained to a mixer (42) linked with means for adding (50) at least one additive.

**29.** Facility according to claim 28, **characterised in that** mixer (42) is equipped with means for confining (43) the product obtained.

**30.** Method for obtaining an anhydrite III-based sulphate binder using a facility according to any of the above claims, **characterised in that** it consists of:
- grinding the product until the reduction thereof to powder according to a grain size range specific to gypsums, between 0 and 5 mm,
- heating the powder product inside the rotary furnace (1) at a predetermined saturating vapour tension and negative pressure, between -10 and -30 Pa,
- cooling the heated powder product inside a rotary cooler (3) comprising a confinement chamber, confining the product to minimise any risk of hydration,
- grinding the product obtained a second time to a grain size of 0 to 200 microns, or between 0 and 500 microns.

**31.** Method according to claim 30, **characterised in that** the powder product is at least any one of a natural gypsum-based binder, a chemical gypsum-based product and a product derived therefrom.

**32.** Method according to any of claims 30 and 31, **characterised in that** mineral additives and/or organic additives are added either at the furnace inlet or to the finished product in proportions between 5 and 50% for mineral additives according to the mineralogical nature thereof and between 0.05 and 10% for organic additives, according to the desired properties of the desired binder and the applications thereof.

**33.** Method according to claim 32, **characterised in that** the mineral additives are selected from a wide variety of products including cements, with no restriction on the nature and composition thereof, limes, with no restriction on the nature and composition thereof, granulated blast furnace slag, fly ash, limestone fines, silica fumes, metakaolins, other anhydrite forms optionally of industrial origin, and any other additions of natural or industrial origin liable to improve the properties of the product or liable to have an economical and/or environmental benefit such as the reuse of by-products or industrial waste.

**34.** Method according to any of claims 30 to 33, **characterised in that** the organic additives are various superplasticisers, such as for example polycarboxylates, specific retarders, waterproofing agents (commercially available waterproofing agents and/or various fatty substances, latexes, etc.).

**36.** Method according to any of claims 30 to 35, **characterised in that** the mineral and organic additives are added to the product equally well either at the furnace inlet or to the finished product in proportions between 5 and 50% for mineral additives according to the mineralogical nature thereof and between 0.05% and 10% for organic additives, according to the desired properties.

## Patentansprüche

1. Anlage zur Herstellung eines sulfatischen Bindemittels basierend auf Anhydrit III ausgehend von einem pulverigen Produkt, wobei diese Anlage einen Dosiertrichter (19), Vorrichtungen zum Erhitzen (1) des pulvrigen Produktes und Vorrichtungen zum Abkühlen (3) des erhitzten pulverigen Produktes enthält, **dadurch gekennzeichnet, dass**:
die besagten Vorrichtungen zum Erhitzen (1) und zum Abkühlen (3) folgenden Teilen zugeordnet sind:
- Mahlvorriahtungen, die in der Lage sind, ein pulveriges Produkt in einem Kerngrößenspektrum von Gipsen, zwischen 0 und 5 mm zu erhalten,
- Vorrichtungen zum Beibehalten (2) einer vorbestimmten gesätigten Dampfspannung und eines vorbestimmten Unterdrucks im Inneren der besagten Vorrichtungen zum Erhitzen (1) zwischen -10 und -30 Pa,
die besagten Vorrichtungen zum Erhitzen (1) aus einem geneigten Ofen mit variabler Drehzahl bestehen, der mit einem modularen Brenner (8) ausgestattet ist,
die besagten Vorrichtungen zum Abkühlen (3) aus einem Kühler mit einer Einschlusskammer bestehen, mit der das abgekühlte pulverige Produkt maximal eingeschlossen werden kann, und die in der Lage ist, jedwede Hydratation durch den Kontakt des besagten abgekühlten pulvengen Produktes mit der Umgebungsluft zu unterbinden,
- und Mahlvorrichtungen, um dieses erhaltene Produkt nach dem Brennen und Abkühlen des erhaltenen Produktes zu zermahlen, bis es eine Korngröße von 0 bis 200µm, oder gar 0 bis 500 µm aufweist.

2. Anlage nach dem vorherigen Anspruch, **dadurch gekennzeichnet, dass** die besagten Vorrichtungen zum Erhitzen (1) aus einem dauerbetriebenen Rotationsofen mit Doppelhülle bestehen, wobei der besagte Ofen ein Gegenstromofen mit indirektem Dauerkontakt ist.

3. Anlage nach Anspruch 2, **dadurch gekennzeichnet, dass** der Rotationsofen (1) mit Doppelhülle jeweils eine innere Hülle (4) und eine äußere Hülle (5) enthält, die zylindrisch und koaxial sind, durch die zumindest ein Eingang (15) für das pulverige Produkt und zumindest ein Ausgang (16) für das erhitzte pulverige Produkt vorgesehen sind.

4. Anlage nach Anspruch 3, **dadurch gekennzeichnet, dass** der Rotationsofen (1) mit Vorrichtungen zum Zirkulieren (17) einer heißen Flüssigkeit (7) zwischen der inneren (4) und der äußeren (5) Hülle ausgestattet ist, die entgegengesetzt einer Strömungsrichtung (47) des besagten pulverigen Produktes vom besagten Eingang (15) zum besagten Ausgang (1B) fließt.

5. Anlage nach Anspruch 4, **dadurch gekennzeichnet, dass** die besagten Zirkulationsvorrichtungen (17) Vorrichtungen für eine schneckenförmige Zirkulation der heißen Flüssigkeit (7) zwischen den besagten Hüllen (4, 5) sind.

6. Anlage nach irgendeinem der Ansprüche 4 und 5, **dadurch gekennzeichnet, dass** zumindest irgendeine der beiden inneren (4) oder äußeren (5) Hüllen zumindest mit einem Führungsflachprofil (18) für die heiße Flüssigkeit (7) ausgestattet ist, das sich über einen Innenraum (6) erstreckt, der zwischen den besagten Hüllen (4, 5) angeordnet ist.

7. Anlage nach irgendeinem der Ansprüche 2 bis 6, **dadurch gekennzeichnet, dass** der Rotationsofen (1) mit Vorrichtungen zum Regeln (22) seiner Rotationsgeschwindigkeit ausgestattet ist, deren Frequenz zwischen einer und 6 Umdrehungen in der Minute liegt.

8. Anlage nach irgendeinem der Ansprüche 3 bis 7, **dadurch gekennzeichnet, dass** der Rotationsofen (1) mit Rührschaufeln (23) ausgestattet ist, die sich
radial über das Innere eines Innenvolumens (24) erstreckt, das von der Innenhülle (4) begrenzt wird.

9. Anlage nach Anspruch 8, **dadurch gekennzeichnet, dass** die Rührschaufeln (23) in der Höhe einstellbar sind.

10. Anlage nach irgendeinem der Ansprüche 2 bis 9, **dadurch gekennzeichnet, dass** der Rotationsofen (1) mit Vorrichtungen zum Aufsammeln (26) von Staub ausgestattet ist.

11. Anlage nach irgendeinem der Ansprüche 2 bis 10, **dadurch gekennzeichnet, dass** der Rotationsofen (1) mit automatisierten Vorrichtungen zumindest zur Zuführung des pulverigen Produktes ausgestattet ist

12. Anlage nach Anspruch 11, **dadurch gekennzeichnet, dass** die automatisierten Vorrichtungen zumindest zur Zuführung des pulverigen Materials in den Ofen einen Dosiertrichter (19) im Bezug mit dem Eingang (15) des Rotationsofens (1) enthalten.

13. Anlage nach irgendeinem der vorherigen Ansprüche, **dadurch gekennzeichnet, dass** der Dosiertrichter (19) mit einem Austragsystem (20) zumindest für das pulverige Produkt ausgestattet ist.

14. Anlage nach irgendeinem der Ansprüche 11 bis 13, **dadurch gekennzeichnet, dass** die besagten Zuführungsvorrichtungen Vorrichtungen zum Regeln (21) der Zuführung von zumindest dem pulverigen Produkt in den Ofen zugeordnet sind.

15. Anlage nach irgendeinem der Ansprüche 2 bis 14, **dadurch gekennzeichnet, dass** der Rotationsofen (1) mit Vorrichtungen zur Regelung (25) eines Abzugs von gesättigtem Dampf aus dem Rotationsofen (1) heraus ausgestattet ist.

16. Anlage nach irgendeinem der Ansprüche 2 bis 15, **dadurch gekennzeichnet, dass** der Rotationsofen (1) mit Vorrichtungen zur Überwachung (46) der Temperatur des pulverigen Produktes am Ausgang des Rotationsofens (1) ausgestattet ist.

17. Anlage nach irgendeinem der Ansprüche 10 bis 16, **dadurch gekennzeichnet, dass** der Ausgang (16) des Rotationsofens (1) mit Vorrichtungen zum Vermischen (29) des erhitzten pulverigen Produktes mit dem Staub enthält, der von den besagten Sammelvorrichtungen (26) aufgesammelt wurde.

18. Anlage nach Anspruch 17, **dadurch gekennzeichnet, dass** die Vorrichtungen zum Vermischen (29) aus einer Mischschnecke bestehen, die mit zwei Rotoren (30) versehen ist, die sich jeweils in die entgegengesetzte Richtung drehen.

19. Anlage nach irgendeinem der Ansprüche 4 bis 18, **dadurch gekennzeichnet, dass** der modulare Brenner (8) zur Generierung der heißen Flüssigkeit (7) sowohl mit Erdgas, als auch mit Leichtöl oder Schweröl betrieben werden kann.

20. Anlage nach irgendeinem der Ansprüche 2 bis 19, **dadurch gekennzeichnet, dass** der Rotationsofen (1) im Verhältnis zu einer waagrechten Ebene (P) um einen variablen Wert zwischen 0% und 3% geneigt ist.

21. Anlage nach irgendeinem der vorherigen Ansprüche, **dadurch gekennzeichnet, dass** die Vorrichtungen zum Abkühlen (3) aus einem Kühler mit indirektem Kontakt bestehen.

22. Anlage nach Anspruch 21, **dadurch gekennzeichnet, dass** der Kühler (3) eine zylindrische Kammer (31) enthält, in deren Inneren das erhitzte pulverige Produkt von einer Zulauföffnung (34) in Richtung einer Auslauföffnung (35) zirkuliert, wobei die besagte zylindrische Kammer (31) mit koaxialen Rohrbündeln (32) ausgestattet ist, in denen eine kalte Flüssigkeit (33) zirkuliert.

23. Anlage nach Anspruch 22, **dadurch gekennzeichnet, dass** die Zirkulation des erhitzten pulverigen Produktes im Inneren der zylindrischen Kammer (31) und die Zirkulation der kalten Flüssigkeit (33) im Inneren der Rohrbündel (32) in ein und dieselbe Zirkulationsrichtung (48, 49) erfolgen

24. Anlage nach irgendeinem der Ansprüche 22 und 23, **dadurch gekennzeichnet, dass** die zylindrische Kammer (31) mit Hubschaufeln (39) ausgestattet ist, die in Richtung der Auslauföffnung (35) geneigt sind.

25. Anlage nach irgendeinem der Ansprüche 22 bis 24, **dadurch gekennzeichnet, dass** die zylindrische Kammer (31) mit Vorrichtungen für ihre Rotation (38) rund um ihre symmetrische Achse mit variablen Drehzahlen ausgestattet ist.

26. Anlage nach irgendeinem der Ansprüche 1 bis 20, **dadurch gekennzeichnet, dass** die Vorrichtungen zum Abkühlen (3) eine Vorrichtung mit Venturi-Effekt (51) enthalten, die mit dem besagten Ausgang (16) zusammenwirkt und die in der Lage ist, am Ofenausgang einen Unterdruck zu induzieren.

27. Anlage nach Anspruch 26, **dadurch gekennzeichnet, dass** die Vorrichtung mit Venturi-Effekt (51) mit peripheren Rohrbündeln ausgestattet ist, in deren Inneren eine abgekühlte Flüssigkeit zirkuliert.

28. Anlage nach irgendeinem der Ansprüche 22 bis 27, **dadurch gekennzeichnet, dass** die Auslauföffnung (35) in Bezug zu einer Schnecke (41) steht, um das erhaltene Produkt zu einem Mischer (42) zu führen, der mit den Vorrichtungen zum Beifügen (50) zumindest eines Additivs zusammenwirkt.

29. Anlage nach Anspruch 28, **dadurch gekennzeichnet, dass** der Mischer (42) mit Vorrichtungen zum Einschließen (43) des erhaltenen Produkts ausgestattet ist.

30. Verfahren für den Erhalt eines sulfatischen Bindemittels basierend auf Anhydrit III durch den Betrieb einer Anlage nach einem der vorherigen Ansprüche, **dadurch gekennzeichnet, dass** es darin besteht,:
- das Produkt bis zu seiner Pulversierung entsprechend eines Korngrößenspektrums von Gips, zwischen 0 und 5 mm zu mahlen,
- das pulverige Produkt im Inneren des Rotationsofens (1) unter einer vorbestimmten gesättigten Dampfspannung und einem Unterdruck zwischen -10 und -30 Pa zu erhitzen,
- das erhitzte pulverige Produkt im Inneren eines Rotationskühlers (3) mit einer Einschlusskammer abzukühlen, indem man das Produkt einschließt, um eine mögliche Hydratation auf ein Minimum zu reduzieren,
- das erhaltene Produkt erneut zu mahlen, bis es eine Korngröße von 0 bis 200µm, oder gar 0 bis 500 µm aufweist.

31. Verfahren nach Anspruch 30, **dadurch gekennzeichnet, dass** das pulverige Produkt zumindest ein Produkt auf Basis von natürlichem Gips, auf Basis von chemischem Gips oder ein Derivat der beiden ersten Produkte ist.

32. Verfahren nach irgendeinem der Ansprüche 30 und 31, **dadurch gekennzeichnet, dass** die mineralischen und/ oder organischen Additive entweder am Eingang des Ofens oder dem fertigen Produkt im Verhältnis zwischen 5 und 50% bei mineralischen Additiven, je nach Mineralbeschaffenheit, und zwischen 0,05 und 10% bei organischen Additiven beigemengt werden, je nachdem, welche Eigenschaften das gesuchte Bindemittel aufweisen soll, und für welche Anwendung es vorgesehen ist.

33. Verfahren nach Anspruch 32, **dadurch gekennzeichnet, dass** die mineralischen Additive unter den verschiedensten Produkten ausgewählt werden, die Zemente, ohne Einschränkung von Art und Zusammensetzung, Kalke, ohne Einschränkung von Art und Zusammensetzung, Granulatschlacke aus Hochöfen, Flugasche, feine Kalke, Siliziumdämpfe, Metakaoline, andere Formen von Anhydriten industrieller Herkunft oder nicht industrieller Herkunft und sonstige Additive natürlicher oder industrieller Herkunft enthalten, die die Produkteigenschaften verbessern können, oder die wirtschaftlich und/ oder ökologisch sinnvoll sind, wie beispielsweise die Verwertung von Unterprodukten oder Industrieabfällen.

34. Verfahren nach irgendeinem der Ansprüche 30 bis 33, **dadurch gekennzeichnet, dass** die organischen Additive diverse Superplastikatoren sind, wie beispielsweise Polykarboxylate, spezifische Verzögerer, wasserabweisende Produkte (wasserabweisende Produkte, die auf dem Markt verfügbar sind und/ oder diverse Feststoffe. Latex,...).

35. Verfahren nach irgendeinem der Ansprüche 30 bis 33, **dadurch gekennzeichnet, dass** die organischen Additive diverse Superplastikatoren sind, wie beispielsweise Polykarboxylate, spezifische Verzögerer, wasserabweisende Produkte (wasserabweisende Produkte, die auf dem Markt verfügbar sind und/ oder diverse Fettstoffe, Latex,...).

36. Verfahren nach irgendeinem der Ansprüche 30 bis 35, **dadurch gekennzeichnet, dass** die mineralischen und organischen Additive entweder am Eingang des Ofens oder dem fertigen Produkt im Varhältnis zwischen 5 und 50% bei den mineralischen Additiven, je nach Mineralbeschaffenheit, und zwischen 0,05 und 10% bei organischen Additiven je nach gesuchten Eigenschaften beigemengt werden.
